# EUROPEAN PATENT APPLICATION

(11) **EP 0 665 687 A2**
(43) Date of publication of application: **02.08.1995**
(21) Application number: 95100594.1
(22) Date of filing: 18.01.1995
(51) Int. Cl.: H04N 5/64, H04N 5/65

(54) **Mechanism for installing a picture tube**

(30) Priority: 01.02.1994 FI 940473
(71) Applicant: NOKIA TECHNOLOGY GmbH, D-75175 Pforzheim (DE)
(72) Inventor: Brandt, Jan, SF-20810 Turku (FI); Oksanen, Rauno, SF-24800 Halikko (FI)

(57) **Abstract**

The present invention relates to a mechanism for installing a picture tube of a TV set or monitor so that the picture tube has been fixedly attached to a frame part (3) on which a desired number of friction sleeves (2) have been installed. In front of the picture tube a mask (1) has been installed on which sleeves (4) have been formed at points corresponding to the friction sleeves (2) of the frame part (3), whereby the sleeves (4) will axially enter the friction sleeves (2) and hold the mask in place by friction.

## Description

The present invention relates to a mechanism for fixing a picture tube of a TV set or monitor to a frame part without clearance, thus enabling installation of an additional panel detachably, also by the user.

The picture tube is as a rule fixed with screws directly to the TV set/monitor case. Endeavours are in this connection made to solve the problem of tolerances by precise dimensioning. Such conventional screw mounting is not adjustable, whereby a gap remaining between the picture tube and the case, causing a visual defect, frequently becomes a problem. In order to eliminate said drawback, washers of different heights can be used in the fixing, depending on the manufacturing tolerance of the tube in each instance. The use of washers is however time-consuming and costly.

If the user discovers such a visual defect, the frame part of the case must be replaced, which involves considerable costs because the apparatus has to be disassembled nearly to its elementary parts. It follows that the manufacturers using picture tubes in their production have been forced to adopt stricter quality control than before in order to avoid shipping a defective product to the customer.

It is also a fact that the curvature of picture tubes often varies between the manufacturers. The new mould for the frame part has to be made for a different picture tube, and this is highly cost-involving. In addition, if a customer wishes to have a different panel in front of the picture tube, a new frame part has to be made.

Also fixing means assemblies containing mobile parts are known in prior art. The Finnish patent No. 86572 discloses a self-adjusting means for locking two objects together when the distance between the fixing points of the objects may vary.

The means of said reference is complex and comprises a number of separate parts, which makes the manufacturing costly and cumbersome.

Through the Finnish patent application No. 935474, a fixing method is known which automatically eliminates the tolerance problem. In the fixing mechanism of said reference, a fixing sleeve has been produced in a TV set or monitor case at the fixing points of the picture tube. A wedge bolt provided with threads on the upper end is inserted in the sleeve, said upper end being passed through the holes of the fixing lugs on the picture tube and nuts are screwed on the threads. The outer surface of the friction sleeve has high friction, whereby the wedge bolt is fixed to the fixing sleeve by friction. However, by said mechanism problems due to divergent curvature of picture tubes from different manufacturers cannot be eliminated.

By means of the mechanism of the present invention all drawbacks mentioned above can be eliminated. In addition, the mechanism is simple, easy to use and makes a wide range of applications feasible.

In the mechanism of the present invention, the tolerance range is reduced in the viewing direction. In the arrangement according to the invention, a separate mask is placed in front of a picture tube or monitor and is fixed to a frame part, and this mask can be adjusted in accordance with the tolerance required. The picture tube is firmly attached to the frame part and need not be moved.

As taught by the invention, a separate mask has been attached to a frame part with friction sleeves. The friction sleeves are advantageously made of dense, tough material which has good friction properties, such as of soft rubber or another material with good friction properties. The friction can be further increased by treating the outer surface of the friction sleeve in a manner adding to its friction. The friction sleeves hold the mask in place with the aid of friction in various situations, preventing inadvertent detachment. The mask is capable of moving axially in the friction sleeves. The number of friction sleeves may vary, depending on the shape of the case and on the mask designed as desired. In order to achieve adequate friction, it is generally necessary to decide case by case how strong the friction should be to meet the needs in each instance. By selecting appropriate raw materials, the magnitude of friction can be substantially affected.

The friction sleeves themselves have been fixed in a suitable way to the frame part. On the mask, sleeves have been produced at points corresponding to the friction sleeves, these sleeves being thin-walled, preferably partly split tubes. The sleeve of the mask is axially slidable in a friction sleeve.

The simplest way of making the mask is usually to produce it from plastic because this is a somewhat elastic material, thus eliminating additional visual problems caused by potential torsion of the mask. The sleeves of the mask may also be of harder material, the desired friction being then produced by means of fits.

Installing the mask of the invention is fast and easy because the mask is merely pressed in place against the frame part. The installation may also be made using an auxiliary template; the installation stresses can then be distributed uniformly over the entire front face area of the mask.

The mask can be detached by pulling, the sleeves of the mask sliding out of the friction sleeves in axial direction. The consumer can himself add under the mask such extra panels as he may desire, such as glass sheets on the surface of the picture tube to cut out reflection or to catch the electric field, without having to take the apparatus to a repair shop, there being no need to open the apparatus, and the user is not exposed to the danger of touching the live parts. The mask is reinstalled by pressing its sleeves into the friction sleeves of the frame part.

Remarkable savings are also gained therethrough that if a picture tube with completely different front radius is to be installed, a new mould needs to be made only for said light and simple mask, and this means only a fraction of the work expenses of the entire case.

The mask itself is also easy to replace, or to substitute with one of different colour, or a new advantageous mask can be made, for the particular case to comply with the marketing considerations.

The essential characteristic features of the invention are presented in the accompanying claims.

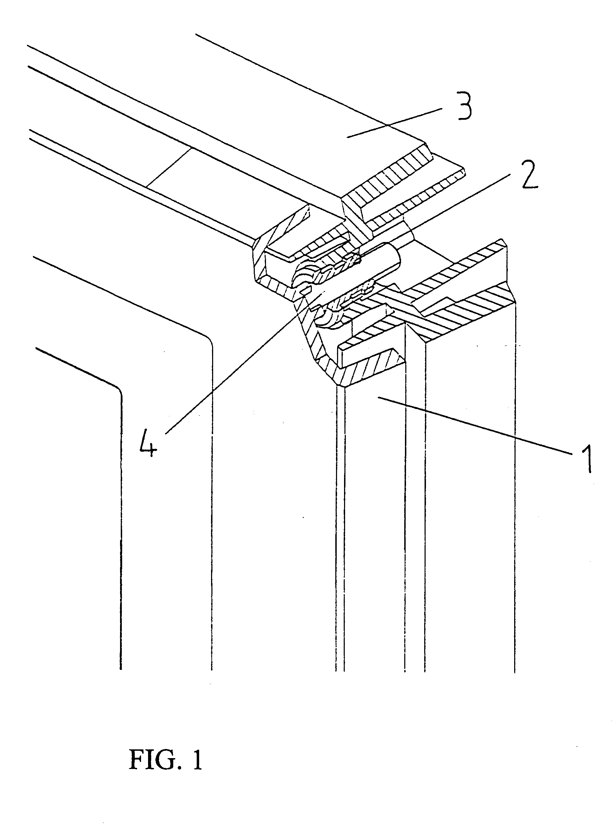

The invention is described below more in detail, reference being made to the figure, in which Fig. 1 presents a mechanism according to the invention in partly sectioned projection, after assembly.

With the mechanism of the invention, the mask 1 depicted in Fig. 1 is meant to be connected to the frame 3, upon a picture tube no excessive pressure between mask and picture tube, which might damage their surfaces, or without leaving a gap between them. The picture tube is fixedly attached to the frame part 3.

In Fig. 1 is seen a friction sleeve 2 fixed in a tubular aperture formed in a suitable manner in the frame part 3, said aperture being substantially equal to the outer diameter of the friction sleeve. In the figure a groove has been provided circumferentially on the outer surface of the friction sleeve 2, which mates with a corresponding rib formed on the circumference of the aperture in the frame part 3. The friction sleeve can be pushed in place by pressing it into the aperture.

On the mask 1, a compressible sleeve 4 has been formed at the point corresponding to the friction sleeve 2. The sleeve has been cast to be an integral part of the mask. The outer diameter of the sleeve 4 is substantially equal to the inner diameter of the friction sleeve 2. Compressibility of the sleeve 4 is achieved by making the sleeve of elastic plastic material, and it is advantageously splitted longitudinally at least at one point. The splitting is extended over at least part of the length of the sleeve 4.

The sleeve 4 is pushed into the friction sleeve 2, where it will be held in place by friction. The mask 1 can be detached and reinstalled on the frame part 3 if desired.

## Claims

1. A mechanism for installing a picture tube (1) of a TV set or monitor, characterized in that the picture tube is fixedly attached to a frame part (3) on which a desired number of friction sleeves (2) have been installed, and in front of the picture tube (1) a mask (1) has been installed on which sleeves (4) have been provided at points corresponding to the friction sleeves (2) of the frame part (3), whereby the sleeves (4) will axially enter the friction sleeves (2) and hold the mask detachably in place by friction.

2. Mechanism according to claim 1, characterized in that the friction sleeve (2) is made of material having good friction properties.

3. Mechanism according to claim 1 or 2, characterized in that the sleeve (4) is compressible.

4. Mechanism according to claim 3, characterized in that the sleeve (4) has been split, at least in part, in its longitudinal direction at least at one point.
